Europäisches Patentamt

European Patent Office

Office européen des brevets

(11) Publication number: **0 080 266**
**B1**

# EUROPEAN PATENT SPECIFICATION

(45) Date of publication of patent specification: **25.03.87**

(51) Int. Cl.⁴: **G 06 F 15/332**

(21) Application number: **82305618.9**

(22) Date of filing: **21.10.82**

(54) **Discrete fourier transform circuit.**

(30) Priority: **24.11.81 GB 8135328**

(43) Date of publication of application:
**01.06.83 Bulletin 83/22**

(45) Publication of the grant of the patent:
**25.03.87 Bulletin 87/13**

(84) Designated Contracting States:
**DE FR IT NL**

(56) References cited:
**US-A-4 023 028**
**US-A-4 199 660**

**IEEE TRANSACTIONS ON COMMUNICATIONS,
vol. COM-26, no. 5, May 1978, pages 690-696,
New York, USA; ZAHEER M. ALI: "A high-
speed FFT processor"**

**WESCON CONFERENCE RECORD, vol. 25,
September 1981, pages 1-8 (3/3), El Segundo,
USA; A.M. PETERSON et al.: "Fast fourier
transform (FFT) and prime factor transform
(PFT) implementations for signal processing
and digital filtering"**

(73) Proprietor: **ITT INDUSTRIES INC.
320 Park Avenue
New York, NY 10022 (US)**

(72) Inventor: **Rossiter, Timothy John Miles
10 Yewlands
Sawbridgeworth CM21 9NP Hertfordshire (GB)**

(74) Representative: **Capsey, Sydney Ross et al
Standard Telephones and Cables Patent
Department Edinburgh Way
Harlow Essex CM20 2SH (GB)**

Courier Press, Leamington Spa, England.

## Description

This invention relates to an electrical circuit arrangement for implementating a discrete Fourier transform (DFT), and to circuits using such arrangements.

Such arrangements are usable in digital signal processing. In one case a circuit having digital filters implemented with the use of DFT provides the equivalent of a set of filters used to assemble a frequency division multiplex (FDM) group from a number of PCM channels after the latter have been converted into linear form. After the signals have been passed through the digital filter thus formed they are passed to the FDM output via digital to analogue circuitry.

A paper entitled "Fast Fourier Transform (FFT) and Prime Factor Transform (PFT) Implementations for Signal Processing and Digital Filtering", by Allen M. Peterson and S. Shankar Narayan, is of interest. This appears in the Wescom Conference Record, Volume 25, September, 1981 at pages 1 to 8 (3/3). In this paper there is described an electronic circuit for the implementation of a DFT, which has input means to which are applied electrical signals representing quantities on which the DFT is to be performed, and a sum and difference processor (SDP) to which those signals are applied. In the paper this processor is referred to as an input processor, and it can perform calculations of the following types on the signals:

$$U_o = X_o$$
$$U_k = X_k + X_{N-k}$$
$$V_k = X_k - X_{N-k}$$

where $X_k$ represents a sequence of input samples of the signals to be processed, N is the number of input samples, and $U_k$ and $V_k$ are the results of the computations. In the arrangements described in the paper the results generated by the input processor are collected in an addressable buffer store (ABS), therein referred to as an intermediate memory buffer, and the results are assembled in that buffer are applied to a sum of products multiplier (SPM), known in the paper as multiplier-accumulator (MAC), which evaluates expressions from the prime factor algorithm, a Winograd SDL-FT.

Although such an arrangement does indeed provide a fast-operating Fourier transform, the operations involve a relatively large number of processing steps. It would clearly be desirable to reduce the number of such steps called for, and it is an object of the invention to achieve such a reduction.

Hence the invention provides a system such as that described in the paper referred to above, but characterised in this, that the value of N, i.e. the order of the DFT matrix forming part of the SDP, is a prime number greater than 2, that the terms of the said matrix can be expressed by the relation

$$W^{P*} = W^{(N-P)} \ P[1, \frac{N-1}{2}]$$

wherein $W^{P*}$ denotes the complex conjugate of $W^P$, that the real and imaginary terms in the results as collected in the ABS are multiplied in the SPM by real and imaginary Fourier coefficients $a_1, b_1, a_2, b_2 . . . ,$ the subscripts having values no greater than k, which is defined by the expression

$$1 \leqslant k \leqslant \frac{(N-1)}{2}$$

and that the results of the multiplication operations are summated to produce 2N expressions, of which one said set of N expressions represents the real results and the other said set of N expressions represents the imaginary results, the arrangement being such that the output signals from the SPM represent 2N expressions which together form a DFT of the quantities represented by the electrical signals applied to the said input means.

This arrangement enables a considerable reduction in the number of processing steps to be attained. As explained in the detailed description which follows, the number of multiplication processing steps is about a quarter of that in the Peterson and Narayan paper.

A transmultiplexer is a circuit which acts as a bidirectional interface between a set of PCM highways and a collection of FDM channels. Thus with such a circuit it is also necessary to be able to convert from the FDM format into the PCM format, and in accordance with the invention this is done by the use of an arrangement which includes filters and an inverse DFT (IDFT). The IDFT is implemented in a very similar manner to the DFT, except that the values at coefficients are different and the sequencing or certain data is changed.

Thus we have a filter arrangement which in effect uses the DFT circuit in the reverse sense to that used for the PCM to FDM transformation. The arrangements to be described herein are intended for use in a transmultiplexer which interfaces between two 30-channel PCM systems and five 12-channel FDM groups.

Embodiments of the invention will now be described with reference to the accompanying drawings in which:

Fig. 1 represents schematically a 10 point transform factorised into 2 point and 5 point transforms.
Fig. 2 represents schematically a 12 point transform factorised into 4 point and 3 point transforms.
Fig. 3 shows a general scheme for implementing an efficient Fourier transform.
Fig. 4 represents data formats used in the DFT evaluation.
Fig. 5 is an outline representation of an SDP.
Fig. 6 is an addressable buffer store (ABS) as used in the arrangement of Fig. 3.

First we consider the theory of the DFT, and show how a number of novel developments lead to an implementation which requires substantially less multiplications than a straightforward DFT implementation. As such it can be called an FFT. We start with a mathematical derivation of the algorithm, and follow this with an implementation thereof, suitable for implementation using LSI digital circuits.

The discrete fourier transform (DFT)
The DFT can be expressed as follows:—

$$y_p = \sum_{q=0}^{N-1} x_q \cdot w^{pq} \qquad p,q,\varepsilon[1, N-1] \qquad (1)$$

where $w=N_1$ or alternatively

$$w = \exp\left(-\left(j\frac{2\pi}{N}\right)\right) \qquad (2)$$

("j" denotes the square root of $-1$).
Equation (1) can be expressed in matrix form, as given where N=5 in equation (3).

$$\begin{bmatrix} y_0 \\ y_1 \\ y_2 \\ y_3 \\ y_4 \end{bmatrix} = \begin{bmatrix} w^0 & w^0 & w^0 & w^0 & w^0 \\ w^0 & w^1 & w^2 & w^3 & w^4 \\ w^0 & w^2 & w^4 & w^1 & w^3 \\ w^0 & w^3 & w^1 & w^4 & w^2 \\ w^0 & w^4 & w^3 & w^2 & w^1 \end{bmatrix} \cdot \begin{bmatrix} x_0 \\ x_1 \\ x_2 \\ x_3 \\ x_4 \end{bmatrix} \qquad (3)$$

The left-hand side of this is a column vector of output samples $[y_p]$, and the right-hand side is the square DFT matrix (referred to as the W matrix) operating on a column vector of input samples $[x_q]$.
The elements of the DFT or W matrix can be derived as follows. The value of the element in the $r$'th row and $p$'th column is obtained by evaluating expression (4).

$$w^{(p.q \bmod N)} \qquad (4)$$

The power of W can be evaluated modulo N since:

$$w^p = w^{p+N} \qquad (5)$$

In equation (3) and the examples discussed the number of points in the data set operated upon (i.e. the value of N) is taken to be five. This does not imply any restriction on the value of N, and in fact different values are used in the transmultiplexer application referred to. The basic DFT (as given in (1) or (3) holds for all values of N.
Equation (3) is the basis for the efficient DFT.

An efficient implementation of a DFT
This technique is applicable to DFT's where N is a prime number, but where N is not prime, a known technique can be used to factorise the transform into prime number transforms, each implementable as described. The implementation is developed using N=5 as an example, although any such prime number could be used. (The case for N=2 is trivial and not appropriate to this method).
The derivation of the efficient transform is simplified when N is prime, since all powers of w appear once and only once in every row of the W matrix in equation (3) (except for row zero). This imparts a high degree of regularity to the subsequent manipulation of this equation.
The terms in the W matrix (i.e. the powers of w in equation (3)) can be re-written by noting that

$$w^{p*} = w^{(N-p)} \qquad p[1, (N-1)/2] \qquad (6)$$

($w^{p*}$ denotes the complex conjugate of $w^p$) or in particular

$$w^4 = w^{1*}, \quad w^3 = w^{2*} \qquad (6b)$$

3

When equation (6b) is substituted in equation (3) we get:

$$\begin{bmatrix} y_0 \\ y_1 \\ y_2 \\ y_3 \\ y_4 \end{bmatrix} = \begin{bmatrix} w^0 & w^0 & w^0 & w^0 & w^0 \\ w^0 & w^1 & w^2 & w^{2*} & w^{1*} \\ w^0 & w^2 & w^{1*} & w^1 & w^{2*} \\ w^0 & w^{2*} & w^1 & w^{1*} & w^2 \\ w^0 & w^{1*} & w^{2*} & w^2 & w^1 \end{bmatrix} \cdot \begin{bmatrix} x_0 \\ x_1 \\ x_2 \\ x_3 \\ x_4 \end{bmatrix} \tag{7}$$

Ignoring row 0 of equation (7), all elements in column 4 of the W matrix in equation (7) are the conjugates of elements in the same row in column 1 and likewise for columns 3 and 2 (the leftmost column is column 0). This allows some saving in computation.

The complex multiplications needed to evaluate equation (7) can be taken in pairs (by selecting those involving multiplication by a coefficient and by its conjugate), and these are now examined.

Let the real and imaginary components of a complex variable be denoted by the upper case representation of that variable, with either 'r' or 'i' appended to indicate real or imaginary parts respectively.

Thus $x_k = Xr_k + jXi_k$ and $c = Cr + jCi$ etc.

Then the sum of a multiplication by a coefficient and its conjugate can be expanded as follows:

$$y = c \cdot x_k + c^* \cdot x_{N-k} \tag{8a}$$
$$= (Cr + jCi) \cdot (Xr_k + jXi_k)$$
$$+ (Cr - jCi) \cdot (Xr_{N-k} + jXi_{N-k}) \tag{8b}$$
$$= (Cr \cdot (Xr_k + Xr_{N-k}) - Ci \cdot (Xi_k - Xi_{N-k}))$$
$$+ j \, (Cr \cdot (Xi_k + Xi_{N-k}) + Ci \cdot (Xr_k - Xr_{N-k})) \tag{8c}$$

likewise

$$z = c^* \cdot x_k + c \cdot x_{N-k} \tag{9a}$$
$$= (Cr - jCi) \, (Xr_k + jKi_k)$$
$$+ (Cr + jCi) \, (Xr_{N-k} + jXi_{N-k}) \tag{9b}$$
$$= (Cr \cdot (Xr_k + Xr_{N-k}) + Ci \cdot (Xi_k - Xi_{N-k}))$$
$$+ j \, (Cr \cdot (Xi_k + Xi_{n-k}) - Ci \cdot (Xr_k - Xr_{N-k})) \tag{9c}$$

Some new variables can be introduced to present the sum and difference terms in equation (8c) and (9c).

$$u_0 = x_0$$
$$u_k = x_k + x_{N-k}$$
$$v_k = x_k - x_{N-k} \quad k \in [1, (N-1)/2] \tag{10a}$$

Or expressed in terms of real or imaginary components

$$Ur_k = Xr_k + Xr_{N-k}$$
$$Ui_k = Xi_k + Xi_{N-k}$$
$$Vr_k = Xr_k - Xr_{N-k}$$
$$Vi_k = Xi_k - Xi_{N-k} \tag{10b}$$

Using these variables, equations (8), (9) can be re-written as follows:—

$$y = [Cr \cdot Ur_k - Ci \cdot Vi_k] + j \, [Cr \cdot Ui_k + Ci \cdot Vr_k] \tag{11}$$
$$z = [Cr \cdot Ur_k + Ci \cdot Vi_k] + j \, [Cr \cdot Ui_k - Ci \cdot Vr_k] \tag{12}$$

To make for a more concise description, a notation is introduced for the operation expressed in equation (8), (9).

i.e.
$$y = c \mathbin{\#} (x_k, \, x_{N-k}) = c \cdot x_k + c^* \cdot x_{N-k} \tag{13}$$
and
$$z = c^* \mathbin{\#} (x_k, \, x_{N-k}) = c^* \cdot x_k + c \cdot x_{N-k} \tag{14}$$

The '#' operator can be defined by the following expansion:

$$c \mathbin{\#} (x_k, \, x_{N-k}) = [Cr \cdot (Xr_k + Xr_{N-k}) - Ci \cdot (xi_k - Xi_{N-k})] + j \, [Cr \cdot (Xi_k + Xi_{N-k}) + Ci \cdot (Xr_k - Xr_{N-k})] \tag{15}$$

(i.e. as given in equation (8c) etc.)

(The y and z variables are introduced temporarily for equations (8)..(14); they are used with a different meaning in other equations herein.)

Using the results of equation (8) and (9), and the notation of (13), etc. it is possible to rewrite equation (7) as follows:—

$$\begin{bmatrix} y_0 \\ y_1 \\ y_2 \\ y_3 \\ y_4 \end{bmatrix} = \begin{bmatrix} w^0 & w^0 & w^0 \\ w^0 & w^1 & w^2 \\ w^0 & w^2 & w^{1*} \\ w^0 & w^{2*} & w^1 \\ w^0 & w^{1*} & w^{2*} \end{bmatrix} \# \cdot \begin{bmatrix} (x_0,0) \\ (x_1,x_4) \\ (x_2,x_3) \end{bmatrix} \qquad (16)$$

The '#' operator requires four real multiplications (as does complex multiplication), but the evaluation of equation (16) required in total about half the number of multiplications as does equation (7). Thus a significant saving in the number of multiplications has been achieved by using the relations of equation (8), (9).

As a refinement, the expressions obtained when equation (16) is evaluated can be written down so that their terms are ordered by the indices of $w^p$.

$$\begin{aligned}
y_0 &= t \\
y_1 &= x_0 + w^1 \,\#\, (x_1, x_4) + w^2 \,\#\, (x_2, x_3) \\
y_2 &= x_0 + w^{1*} \,\#\, (x_2, x_3) + w^2 \,\#\, (x_1, x_4) \\
y_3 &= x_0 + w^1 \,\#\, (x_2, x_3) + w^{2*} \,\#\, (x_1, x_4) \\
y_4 &= x_0 + w^{1*} \,\#\, (x_1, x_4) + w^{2*} \,\#\, (x_2, x_3)
\end{aligned} \qquad (17)$$

where

$$t = \sum_{q=0}^{N-1} x_q$$

Finally, for completeness the entire sequence of operations necessary to calculate a 5 point DFT is as follows:—

First form the u, v and t (complex valued) terms

$$\begin{aligned}
u_0 &= x_0 \\
u_1 &= x_1 + x_4 \\
v_1 &= x_1 - x_4 \\
u_2 &= x_2 + x_3 \\
v_2 &= x_2 - x_3 \\
t &= x_0 + x_1 + x_2 + x_3 + x_4
\end{aligned} \qquad (18)$$

Let the real and imaginary parts of the powers of w be written as:

$$\begin{aligned}
w^1 &= a_1 + jb_1 \\
w^2 &= a_2 + jb_2
\end{aligned}$$

Then form the y terms, expressed as real and imaginary components

$$\begin{aligned}
Yr_0 &= Tr_0 \\
Yi_0 &= Ti_0 \\
Yr_1 &= Ur_0 + a_1 \cdot Ur_1 - b_1 \cdot Vi_1 + a_2 \cdot Ur_2 - b_2 \cdot Vi_2 \\
Yi_1 &= Ui_0 + a_1 \cdot Ui_1 + b_1 \cdot Vr_1 + a_2 \cdot Ui_2 + b_2 \cdot Vr_2 \\
Yr_2 &= Ur_0 + a_1 \cdot Ur_2 + b_1 \cdot Vi_2 + a_2 \cdot Ur_1 - b_2 \cdot Vi_1 \\
Yi_2 &= Ui_0 + a_1 \cdot Ui_2 - b_1 \cdot Vr_2 + a_2 \cdot Ui_1 + b_2 \cdot Vr_1 \\
Yr_3 &= Ur_0 + a_1 \cdot Ur_2 - b_1 \cdot Vi_2 + a_2 \cdot Ur_1 + b_2 \cdot Vi_1 \\
Yi_3 &= Ui_0 + a_1 \cdot Ui_2 + b_1 \cdot Vr_2 + a_2 \cdot Ui_1 - b_2 \cdot Vr_1 \\
Yr_4 &= Ur_0 + a_1 \cdot Ur_1 + b_1 \cdot Vi_1 + a_2 \cdot Ur_2 + b_2 \cdot Vi_2 \\
Yi_4 &= Ui_0 + a_1 \cdot Ui_1 - b_1 \cdot Vr_1 + a_2 \cdot Ui_2 - b_2 \cdot Vr_2
\end{aligned} \qquad (19)$$

The expressions in equation (19) suggest a useful hardware configuration in which a 'Sum of Products Multiplier', such as described in our co-pending application EP—A—78101 (T. J. M. Rossiter) is loaded with the coefficient values formed by real and imaginary components of $w^0$, $w^1$, $w^2$, that is 1, $a_1$, $b_1$, $a_2$, $b_2$, and then the data is presented to the relevant inputs to calculate the $Yr_p$ and $Yi_p$ terms. Such a configuration is described below.

The advantages of performing a DFT as described are as follows:—

1. The total number of multiplications needed is approximately half that for a normal DFT.

2. Re-ordering the data (as in equations (17), (19)) allows very efficient use of a particular form of Sum of Products Multiplier.

3. Performing all the non-trivial multiplications in a single step (i.e. evaluating each line of equation (19) completely in a Sum of Products Multiplier) produces smaller numerical rounding errors than do some alternative FFT algorithms.



# 0 080 266

Extending the efficient DFT to other values of N

We have described how an efficient Fourier transform was derived for N points, N being prime. We now extend it to the case when N is not prime. The techniques used are known and are included to show how the ideas can be applied more widely. We do not give a general treatment, but instead a worked derivation showing how the 5 point transform can be extended to a 10 point transform.

Where N is not prime it can be factorised into a set of factors $N_0$, $N_1$, ... $N_{M-1}$

$$N = N_0 \times n_2 \times \ldots \times N_{M-1} \qquad (20)$$

Thus it is possible to factorise the N point DFT into a number of smaller DFTs, each implementable using the techniques described above. If the factors have no common prime factors they are said to be mutually prime, and the resultant factorised DFT has particularly attractive properties. But even if the factors are not mutually prime, techniques similar to those described below can be used, though the count of the number of multiplications is higher.

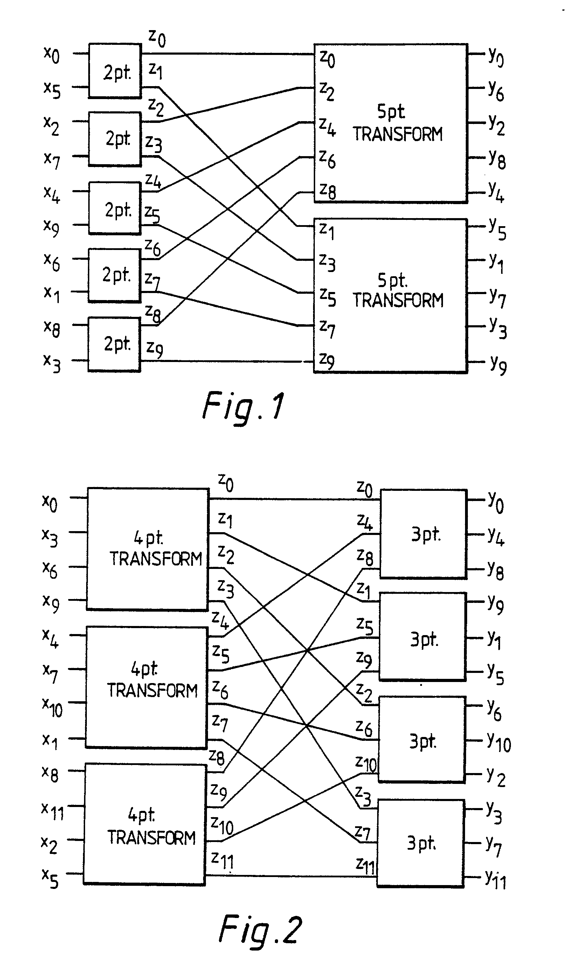

*As an example: N=10 has factors 2, 5 (which are mutually prime). A 10 point Fourier transform can be* realised as five 2 point transforms followed by two 5 point transforms, see Fig. 1. A further example is given by a 12 point DFT, realised as three 4 point and four 3 point transforms, see Fig. 2.

The correct sequencing of the input and output data is crucial to the operation of the factorised DFT, but since the derivation is complicated, only the results are presented here.

A useful saving in the number of multiplications occurs when the transforms are factorised. The figures for a regular 10 point DFT, a factorised DFT and a factorised DFT in which the 5 point factors use the FFT algorithm described above are as follows:—

| Transform | No. of real multiplications |
| --- | --- |
| 10 pt DFT | 304 |
| Factorised | 128 |
| FFT factors | 64 |

These figures give the number of non-trivial real multiplications i.e. multiplications involving factors other than unity. Thus the FFT algorithm described above needs (in this case) less than 1/4 the number of multiplications involved in a simple DFT.

Hardware implementation of the efficient DFT

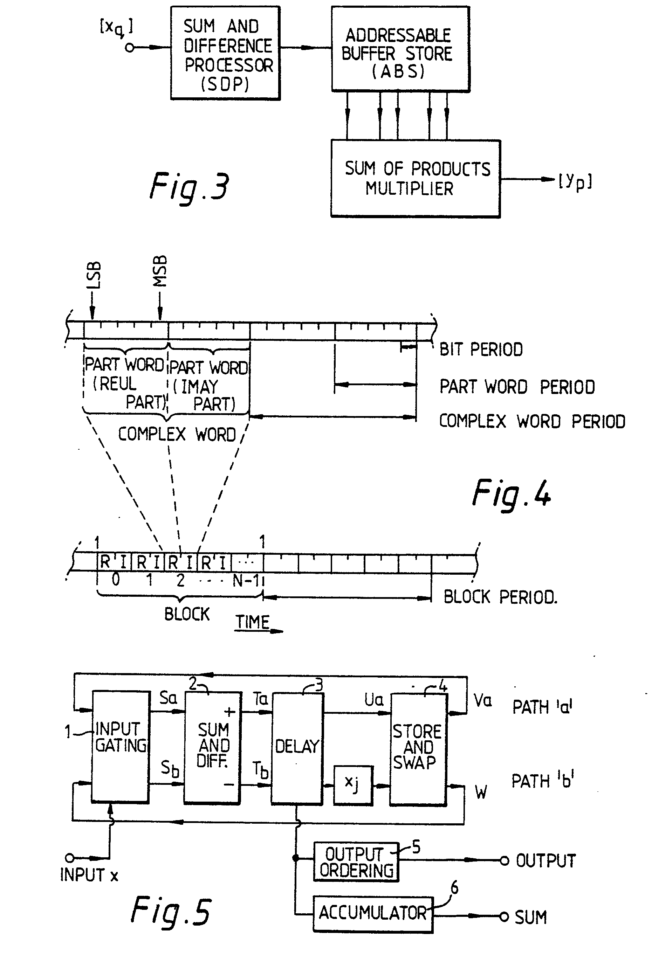

The logic needed to implement the efficient DFT is shown in outline in Fig. 3. The data is first processed by a "Sum and Difference Processor" (SDP) which can perform calculations such as those of equation (10). The SDP is followed by an "Addressable Buffer Store" (ABS) which collects the data generated by the SDP and routes it to a "Sum of Products Multiplier" (SPM) e.g. as described in our above mentioned Application, which evaluates expressions of the form of those in equation (19). It can evaluate a number of multiplications simultaneously and form their sum in one data word period.

It is possible to design logic specialised for one particular order of DFT (e.g. an SDP and ABS designed specifically for a 10 point transform), but here we use more general-purpose logic which is usable on a limited, though useful, class of transforms. The operations performed by this logic for any particular DFT are then determined by control signals, i.e. the logic can be electrically programmed to suit a number of related implementations.

We first define certain terms and then describe the operation of the SDP and ABS, plus brief details of their use in typical DFT computations.

Definition of terms, data formats etc

Abbreviations used are ABS for Addressable Buffer Store, SDP for Sum and Difference Processor, and SPM for Sum of Products Multiplier.

The following terms are used herein:

*Part-word*: AN individual real data value (which may be represented for example by a two's complement binary number).

*Complex word:* An individual complex data value consisting of two Part-Words (representing the real and the imaginary parts).

*Block:* A collection of Complex Words forming the input or output data of a DFT i.e. there are N Complex words in the Block of input data for an N point DFT.

Part-Words are composed of M binary bits, M being constant but not specified, serially sequenced such that the least significant bit occurs first followed by bits of increasing significance. Thus a part-word period is M times the fundamental bit period. Two's complement arithmetic is assumed to be used. Complex words are normally sequenced with the real part preceding the complex part, so that a complex word

6

The SPM is loaded with the (real and imaginary) coefficient values for $w^0$, $w^1$, $w^2$ and then the u, v and t terms are routed to the SPM to yield the expressions given in equation (19).

Example 2. A 10 point DFT

In this case the 10 point transform is factorised into 2 point and 5 point transforms (in the manner shown in Fig. 1). The SDP evaluates the five 2 point DFT factors and the sum and difference terms in the 5 point factors. The calculations performed by the SDP are given in equation (21), (22).

$$
\begin{aligned}
&x_0+x_5 \rightarrow z_0, && z_0 \rightarrow u_0 \\
&x_0+x_5 \rightarrow z_1, && z_1 \rightarrow u_1 \\
\\
&x_2+x_7 \rightarrow z_2, && z_2+z_8 \rightarrow u_2 \\
&x_2-x_7 \rightarrow z_3, && z_2-z_8 \rightarrow v_2 \\
&x_8+x_3 \rightarrow z_8, && z_3+z_9 \rightarrow u_3 \\
&x_8-x_3 \rightarrow z_9, && z_3-z_9 \rightarrow v_3 \\
\\
&x_4+x_9 \rightarrow z_4, && z_4+z_6 \rightarrow u_4 \\
&x_4-x_9 \rightarrow z_5, && z_4-z_6 \rightarrow v_4 \\
&x_6+x_1 \rightarrow z_6, && z_5+z_7 \rightarrow u_5 \\
&x_6-x_1 \rightarrow z_7, && z_5-z_7 \rightarrow v_5
\end{aligned} \tag{21}
$$

$$t_0=z_0+z_2+z_4+z_6+z_8$$

$$t_1=z_1+z_3+z_5+z_7+z_9 \tag{22}$$

The SDP interleaves calculations for the 2 point transforms with the pre-processing for the 5 point transforms. The data generated by the SDP is stored in the ABS in the following manner:—

| | |
|---|---|
| $u_0$, $t_0$ | store 00 (or 02 during alternate blocks) |
| $u_1$, $t_1$ | store 01 (or 03 during alternate blocks) |
| $u_2$, $v_2$, $u_4$, $v_4$ | store 10 (or 12 during alternate blocks) |
| $u_3$, $v_3$, $u_5$, $v_5$ | store 11 (or 13 during alternate blocks) |

The five point transforms can then be evaluated in a similar manner to the first example (using $(u_0, u_2, v_2, u_4, v_4)$ and $(u_1, u_3, v_3, u_5, v_5)$) in expressions of the form of equation (19).

Example 3. A 12 point DFT

This is factorised into three 4 point and four 3 point transforms, as shown in Figure 2. One SDP evaluates the three 4 point DFT factors; the three point DFTs can either be evaluated directly by an SPM or a second SDP and SPM with fewer inputs. The calculations performed by the first SDP are given in equation (23), and those by the second SDP in equation (24), (25).

period is twice a part-word period. Finally, blocks consist of a serially-sequenced collection of complex words. The sequencing is specified for a particular implementation, but a block period is N times a complex word period. These formats are shown in Fig. 4.

The fundamental unit of data in general is the complex word, though at times it may be necessary to manipulate separately the real and imaginary part-word. Likewise the fundamental unit of time is the complex word period, though the logic will need synchronisation at both the part-word rate and bit rate.

Sum and difference processor (SDP)

The SDP shown in outline in Fig. 5 has two parallel paths 'a' and 'b' which are treated slightly differently. The blocks in Fig. 5 have the following functions:

The 'Input Gating' 1 can select either input data or the stored results of previous computations. The selected signal passes to the 'Sum and Difference' circuit 2 which has two outputs. The 'a' path output is the sum of the two paths, and 'b' path output is the difference.

There is a complex word period delay 3 after the sum and difference circuit, which is included to allow certain data re-ordering. The box marked 'xj' in the 'b' path indicates multiplication by 'j'. which can be activated or deactivated. Finally the two paths pass to the store 4 where they can be held for further computation. The store can also swap over the paths (as needed in certain computations).

The output from the SDP is taken after the delay stage 3. In includes a circuit 5 to re-order the real and imaginary part words so that calculations of the form of equation (11), (12) can be performed easily by an SPM. The output can also be passed internally to an accumulator 6, whose output is available separately.

The operation of these various components of the SDP can be modified by control signals, though these are not described in detail. The SDP is sufficiently versatile to be used in the computation of a number of different DFT's, three examples of which are given above.

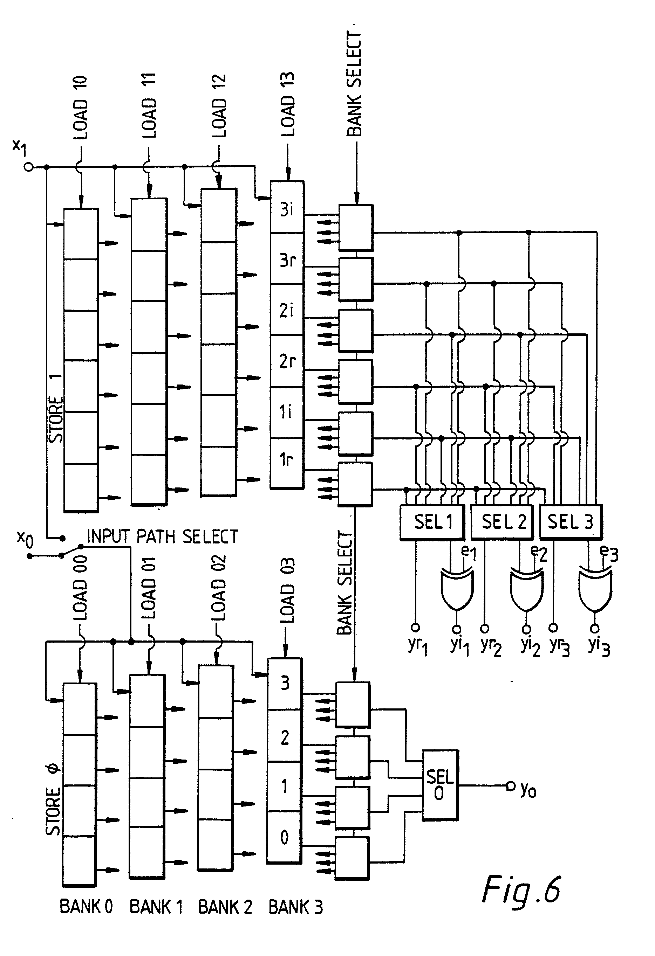

Addressable buffer store (ABS) (Fig. 6)

The purpose of the Adressable Buffer Store (ABS) is to collect a block of data and then allow a selection of the complex words in that block to be routed to a number of output lines. The store is so configured that one part can be collecting data whilst the other part delivers data collected during a previous block. At the start of the next block, the part which was previously collecting data can be used to deliver it, and the other part can in turn collect fresh data.

The ABS, Fig. 6, consists of two main stores numbered 0 and 1 and logic to load the stores and route the contents of selected locations to the ABS outputs. Each store can operate relatively independently and is internally partitioned into four banks. The facility of loading a store whilst reading previously loaded values is realised by using some banks for loading and others for reading.

The loading of both stores is similar. During each complex word period one bank of store 0 and one bank of store 1 may be loaded, the banks being independently selected. When a store is loaded the existing contents (one complex word per location) 'move down' (e.g. the complex word in 3r moves to 2i and is replaced by that in 3i) and the input is loaded into the topmost location (e.g. 3i). When a store is not selected for loading, the contents remain in the same location. Each location holds a complex word.

There is a slight difference between the two stores in the method of reading data. In store 0 one location from one bank is selected and fed to output $Y_0$. In store 1 six locations, all from the same bank, can be selected simultaneously. The locations and outputs are grouped in three pairs (the "i" and "r" locations being grouped together) and the pair of locations selected for each output is independently controlled. Each "i" output ($Yi_1$, $Yi_2$, $Yi_3$) has an inversion facility, used to effect the sign inversions necessary for complex multiplication. The locations accessed by the output selectors can be in any of the four banks, the actual bank selected being determined by an additional control (common to both stores).

By using the various store access controls described above, it is possible to use the ABS to route data to a sum of products multiplier and so compute expressions of the form given in equation (19). It is also possible to use the ABS as a "Timeslot Interchanger", an example of such use could be in arranging the data in the special sequence required by a particular DFT.

Examples of DFT's

The implementation of three FFT's using the SDP, ABS and SPM devices is described. It is possible to apply the SDP, ABS and SPM to a wider range of DFT's than given in these examples, and in fact in the transmultiplexer application, it was a 14 point application made up of seven two-point devices feeding two seven point devices. In some cases this may require a multiplicity of the three basis devices and/or an ABS device with a greater storage capacity.

Example 1. A 5-point DFT

This is the simplest case: a 5 point transform is preformed using the techniques referred to above. The SDP evaluates the expressions given in equation (18) and generates the u, v and t complex terms during a block period. They are then stored in the ABS in the following manner:—

| | |
|---|---|
| $u_0$, t | store 00 (or 01 during alternate blocks) |
| $u_1$, $v_1$, $u_2$, $v_2$ | store 10 (or 11 during alternate blocks) |

$$X_0+X_6{\rightarrow}S_0 \qquad\qquad\qquad\longrightarrow S_0+S_2{\rightarrow}Z_0$$
$$X_0-X_6{\rightarrow}Z_1 \qquad\qquad\qquad\longrightarrow S_0-S_2{\rightarrow}Z_2$$
$$X_3+X_9{\rightarrow}S_2 \qquad\qquad\qquad\longrightarrow S_1+jS_3{\rightarrow}Z_1$$
$$X_3-X_9{\rightarrow}S_3 \qquad\qquad\qquad\longrightarrow S_1-jS_3{\rightarrow}Z_3$$

$$X_4+X_{10}{\rightarrow}S_4 \qquad\qquad\qquad\longrightarrow S_4+S_6{\rightarrow}Z_4$$
$$X_4-X_{10}{\rightarrow}S_5 \qquad\qquad\qquad\longrightarrow S_4-S_6{\rightarrow}Z_6$$
$$X_7+X_1{\rightarrow}S_6 \qquad\qquad\qquad\longrightarrow S_5+jS_7{\rightarrow}Z_5$$
$$X_7-X_1{\rightarrow}S_7 \qquad\qquad\qquad\longrightarrow S_5-jS_7{\rightarrow}Z_7$$

$$X_8+X_2{\rightarrow}S_8 \qquad\qquad\qquad\longrightarrow S_8+S_{10}{\rightarrow}Z_8$$
$$X_8-X_2{\rightarrow}S_9 \qquad\qquad\qquad\longrightarrow S_8-S_{10}{\rightarrow}Z_{10}$$
$$X_{11}+X_5{\rightarrow}S_{10} \qquad\qquad\qquad\longrightarrow S_9+jS_{11}{\rightarrow}Z_9$$
$$X_{11}-X_5{\rightarrow}S_{11} \qquad\qquad\qquad\longrightarrow S_9-jS_{11}{\rightarrow}Z_{11} \tag{23}$$

$$Z_0{\rightarrow}U_0$$
$$Z_4+Z_8{\rightarrow}U_4$$
$$Z_4-Z_8{\rightarrow}V_4$$

$$Z_1{\rightarrow}U_1$$
$$Z_6+Z_9{\rightarrow}U_6$$
$$Z_5-Z_9{\rightarrow}V_5$$

$$Z_2{\rightarrow}U_2$$
$$Z_6+Z_{10}{\rightarrow}U_6$$
$$Z_6-Z_{10}{\rightarrow}V_6$$

$$Z_3{\rightarrow}U_3$$
$$Z_7+Z_{11}{\rightarrow}U_3$$
$$Z_7-Z_{11}{\rightarrow}U_7 \tag{24}$$

$$t_0=Z_0+Z_4+Z_8$$
$$t_1=Z_1+Z_5+Z_9$$
$$t_0=Z_2+Z_6+Z_{10}$$
$$t_0=Z_3+Z_7+Z_{11} \tag{25}$$

The output of the SDP is stored in the ABS in the following manner:—

| | | |
|---|---|---|
| $u_0,\ u_1,\ u_2,\ u_3$ | store 00 | (and using stores 02, 03, 12, 13 |
| $t_0,\ t_1,\ t_2,\ t_3$ | store 01 | in the alternate blocks |
| $u_4,\ v_4,\ u_5,\ v_5$ | store 10 | |
| $u_6,\ v_6,\ u_7,\ v_7$ | store 11 | |

Finally the SPM computes expressions of the form:—

$$Yr_0=Tr_0$$
$$Yi_0=Ti_0$$
$$Yr_4=Ur_0+a_1 . Ur_4-b_1 . Vi_4$$
$$Yi_4=Ui_0+a_1 . Ui_4+b_1 . Vr_4$$
$$Yr_8=Ur_0+a_1 . Ur_4+b_1 . Vi_4$$
$$Yi_8=Ui_0+a_1 . Ui_4-b_1 . Vr_4 \tag{26}$$

**Claims**

1. An electronic circuit for the implementation of a discrete Fourier transform (DFT), which includes input means to which are applied electrical signals representing quantities on which the DFT is to be performed, and a sum and difference processor (SDP) to which those signals are applied from the input means and which can perform calculations of the following types on the signals:

$$U_o=X_o$$
$$U_k=X_k+X_{N-k}$$
$$V_k=X_k-X_{N-k}$$

where $X_k$ represents a sequence of input signal samples U and V are respectively the sum and the difference results of the calculations performs by the SDP, wherein N is the order of a DFT matrix which forms part of the SDP, wherein the results thus generated by the SDP are collected in an addressable buffer store (ABS), and wherein the results as assembled in the ABS are applied to sum of products multiplier (SPM) which evaluates expressions from a prime factor algorithm, characterised in this, that the value of N, i.e. the order of the DFT matrix forming part of the SDP, is a prime number greater than 2, the terms of the said matrix can be expressed by the relation

$$W^{P*}=W^{(N-P)} \quad P\varepsilon[1,\frac{N-1}{2}]$$

wherein $W^{P*}$ denotes the complex conjugate of $W^P$, that the real and imaginary terms of the results as collected in the ABS are multiplied in the SPM by real and imaginary Fourier coefficients $a_1$, $b_1$, $a_2$, $b_2$... where $a_k+jb_k=W^k$., the subscripts having values no greater than k, which is defined by the expression

$$1 \leqslant k \leqslant \frac{(N-1)}{2}$$

and that the results of the multiplication operations are summated to produce 2N expressions, of which one said set of N expressions represents the real results and the other said set of N expressions represents the imaginary results, the arrangement being such that the output signals from the SPM represent 2N expressions which together form a DFT of the quantities represented by the electrical signals applied to the said input means.

2. An electrical circuit as claimed in claim 1, characterised in this, that in the said DFT matrix, which forms part of the SDP, all elements in the last column of the matrix are the conjugates of the elements in the first column of the matrix, that all elements in the last but-one column of the matrix are the conjugates of those in the second column of the matrix, and so on for any other columns of the matrix, and that for the purposes of the above relationships the zero column of the matrix is ignored.

3. An electrical circuit arrangement for the conversion of signals from a number of PCM channels into a frequency division multiplex (FDM) group, characterised by an electrical circuit as claimed in claim 1 or 2 for the implementation of a DFT, means to convert PCM words from said channels into their linear representations, connections over which said linear representations are applied to the said input means of said DFT, which thus functions as a polyphase filter in respect of the said linear representations of the PCM words.

**Patentansprüche**

1. Elektronische Schaltungsanordnung zur Durchführung einer diskreten Fourier-Transformation (=DFT)

mit Eingangsschaltungen, denen elektrische Signale in Form von Daten zugeführt sind, auf die die DFT anzuwenden ist, und

mit einem Summen- und Differenzprozessor (=SDP) (SDP), dem die Signale von den Eingangsschaltungen zugeführt sind und der mit diesen Signalen folgende Berechnungen durchführt:

$$U_o=X_o$$
$$U_k=X_k+X_{N-k}$$
$$V_k=X_k-X_{N-k}$$

wobei $X_k$ eine Folge von Eingangs-Abtastwerten sind,

wobei U und V die jeweiligen Summen bzw. die jeweiliten Differenzen der durch die SDP durchgeführten Berechnungen sind,

wobei N der Rang einer DFT-Matrix ist, die Teil der SDP ist,

wobei die durch die SDP berechneten Werte in einem adressierbaren Zwischenspeicher (−ABS) (ABS) gespeichert sind und

wobei diese im ABS gespeicherten Werte einem Multiplizierer für Produktsummen (=SPM) (SPM) zugeführt sind, der Ausdrücke von einem Primfaktor- Algorithmus berechnet gekennzeichnet durch folgende Merkmale:

der Wert von N, also der Rang der DFT-Matrix, ist eine Primzahl größer als 2,

die Elemente dieser Matrix werden durch folgende Beziehung beschrieben:

$$W^{P*}=W^{(N-P)} \quad \text{mit } P\varepsilon[\frac{N-1}{2}],$$

wobei $W^{P*}$ der konjugiert-komplexe Wert von $W^P$ ist,

die Real- und die Imaginärteile der im ABS gespeicherten Werte werden im SDP mit realen und

# 0 080 266

conjugués de ceux de la deuxième colonne de la matrice, et ainsi de suite pour toutes les autres colonnes de la matrice et en ce que, aux fins de la relation précédente, on ne tient pas compte de la colonne zéro de la matrice.

3. Arrangement de circuits électriques pour la conversion de signaux d'un certain nombre de voies MIC en un groupe à multiplexage par répartition de fréquence, caractérise par un circuit électrique conforme à la revendication 1 ou 2 pour la réalisation d'une DFT, des moyens pour convertir des mots MIC desdites voies en leur représentation linéaire, des connexions par lesquelles ces représentations linéaires sont appliquées auxdits moyens d'entrée de cette DFT, laquelle fonctionne ainsi comme un filtre polyphasé à l'égard desdites représentations linéaires des mots MIC.

imaginären Fourier-Koeffizienten $a_1$, $b_1$, $a_2$, $b_2$. . . multipliziert, wobei $a_k+jb_k=W^k$ ist und die Indizes (1. . 2 . ) nicht größer als k sind, das durch folgende Ungleichung definiert · ist:

$$1 \leqslant k \leqslant \frac{N-1}{2}$$

die Ergebnisse der Multiplikationen werden zu 2N Werten aufsummiert, wobei die eine Gruppe von N Werten die realen und die andere Gruppe von N Werten die imaginären Ergebnisse darstellt, so daß die Ausgangssignale des SPM 2N Werte darstellen, die zusammen eine DFT der Daten ergeben, welche durch die den Eingangsschaltungen zugeführten elektrischen Signale dargestellt sind.

2. Schaltungsanordnung nach Anspruch 1, dadurch gekennzeichnet,

daß in der DFT-Matrix die Teil der SDP ist, alle Elemente der letzten Matrixspalte die Konjugierten der Elemente der ersten Matrixspalte sind,

daß alle Elemente in der vorletzten Matrixspalte die Konjugierten der Elemente der zweiten Matrixspalte sind, usw. für jede weitere Matrixspalte und

daß deswegen die nullte Matrixspalte nicht berücksichtigt ist.

3. Schaltungsanordnung zur Umwandlung von Signalen einer Anzahl von PCM-Kanälen in eine Frequenzmultiplex-Gruppe gekennzeichnet durch:

eine Schaltungsanordnung nach Anspruch 1 oder 2 zur Durchführung einer DFT und

Schaltungsmittel um PCM-Datenwörter der PCM-Kanäle in ihre entsprechenden linearen Größen umzuwandeln und den Eingangsschaltungen der DFT zuzuführen, so daß diese als eine Polyphasenfilter bezüglich der linearen Größen wirkt.

## Revendications

1. Circuit électronique pour la réalisation de transformées de Fourier discrètes (DFT) qui comprend des moyens d'entrée auxquels sont appliqués des signaux électriques représentant des quantités sur lesquelles la DFT doit être effectuée et un processeur de sommes et de différences (SDP) auquel ces signaux sont appliqués depuis les moyens d'entrée et qui peut effectuer sur les signaux des calculs des types suivants:

$$U_o=X_o$$
$$U_k=X_k+X_{N-k}$$
$$V_k=X_k-X_{N-k}$$

dans lesquels $X_k$, représente une séquence d'échantillons de signal d'entrée, U et V sont respectivement les résultats de somme et de différence des calculs effectés par le SDP, N étant l'ordre d'une matrice DFT formant partie du SDP, les résultats ainsi engendrés par le SDP étant collectés dans une mémoire tampon adressable (ABS) et les résultats assemblés dans l'ABS étant appliqués à un multiplicateur à somme de produits (SPM) qui évalue des expressions par un algorithme à facteurs premiers, caractérisé en ce que la valeur de N, c'est-à-dire l'ordre de la matric DFT formant partie du SDP est un nombre premier plus grand que 2, les termes de cette matrice pouvant être exprimés par la relation:

$$W^{P^*}=W^{(N-P)} \quad P \varepsilon \ 1, \frac{N-1}{2}$$

dans laquelle $W^{P^*}$ représente la conjuguée complexe de $W^P$, en ce que les termes réels et imaginaires des résultats collectés dans l'ABS sont multipliés dans le SPM par des coefficients de Fourier réels et imaginaires $a_1$, $b_1$, $a_2$, $b_2$. . ., tels que $a_k+jb_k=w^k$, les indices ne comprenant pas de valeur supérieure à k qui est défini par l'expression:

$$1 \leqslant k \leqslant \frac{(N-1)}{2}$$

et en ce que les résultats des opérations de multiplication sont sommés pour fournir 2N expressions dans lesquelles un ensemble de N expressions représente les résultat réels et l'autre ensemble de N expressions représente les résultats imaginaires, l'arrangement étant tel que les signaux de sortie de SPM représentent 2N expressions qui, ensemble, forment une DFT des quantités représentées par les signaux électriques appliqués auxdits moyens d'entrée.

2. Circuit électrique selon la revendication 1, caractérisé en ce que dans ladite matrice DFT, faisant partie du SDP, tous les éléments de la dernière colonne de la matrice sont les conjugués des éléments de la première colonne de la matrice, tous les éléments de l'avantdernière colonne de la matrice sont les

11

Fig.1

Fig.2

1

Fig.3

Fig.4

Fig.5

2

Fig.6